# EUROPÄISCHE PATENTSCHRIFT

(11) **EP 3 986 746 B1**
(45) Veröffentlichungstag und Bekanntmachung des Hinweises auf die Patenterteilung: **25.09.2024**
(21) Anmeldenummer: 20734863.2
(22) Anmeldetag: 18.06.2020
(51) Int. Cl.: B60N 2/20, B60N 2/32, E05B 41/00

(54) **INDIKATOREINRICHTUNG UND FAHRZEUGSITZ**
INDICATOR DEVICE AND VEHICLE SEAT
DISPOSITIF INDICATEUR ET SIÈGE DE VÉHICULE

(30) Priorität: 20.06.2019 DE 102019209006
(43) Veröffentlichungstag der Anmeldung: 27.04.2022
(73) Patentinhaber: VOLKSWAGEN AKTIENGESELLSCHAFT, 38440 Wolfsburg (DE)
(72) Erfinder: REICHELT, Ralf, 38531 Rötgesbüttel (DE); LÜDECKE, Christoph, 38108 Braunschweig (DE)
(86) Internationale Anmeldenummer: PCT/EP2020/066908
(87) Internationale Veröffentlichungsnummer: WO 2020/254478

(56) Entgegenhaltungen:
- DE-A1- 10 230 637
- GB-A- 2 459 394
- US-A1- 2018 297 495

## Beschreibung

Die Erfindung betrifft eine Indikatoreinrichtung für ein beweglich gelagertes Element, insbesondere Rückenlehne eines Fahrzeugsitzes, das durch eine entriegelbare Verriegelungsvorrichtung in zumindest einer Stellung arretierbar ist, wobei die Indikatoreinrichtung zumindest ein Indikatorelement, das von einer in einem Gehäuse versenkten Ruheposition in eine von dem Gehäuse vorstehenden Anzeigeposition bewegbar ist, und eine Aktuatoreinrichtung zum Bewegen des Indikatorelements in Abhängigkeit von einem Zustand der Verriegelungsvorrichtung aufweist.

Weiterhin betrifft die Erfindung einen Fahrzeugsitz für ein Fahrzeug, insbesondere Kraftfahrzeug, mit einem Sitzteil und mit einer dem Sitzteil zugeordneten und verschwenkbar gelagerten Rückenlehne, wobei die Rückenlehne durch eine entriegelbare Verriegelungsvorrichtung in zumindest einer Stellung arretierbar ist, und wobei an der Rückenlehne eine Indikatoreinrichtung zum Anzeigen eines Betätigungszustands der Verriegelungsvorrichtung angeordnet ist.

Indikatoreinrichtungen und Fahrzeugsitze der eingangs genannten Art sind aus dem Stand der Technik bekannt. So offenbart beispielsweise die Offenlegungsschrift DE 20 2017 005 433 U1 eine Verriegelungsvorrichtung für eine verschwenkbare Rückenlehne eines Fahrzeugsitzes. Die Verriegelungsvorrichtung dient dazu, die Rückenlehne in zumindest einer Schwenkstellung zu arretieren und bei Bedarf diese Arretierung durch das Entriegeln der Verriegelungsvorrichtung zu lösen. Die Verriegelungsvorrichtung ist mechanisch wirkend ausgebildet, um die Arretierung der Rückenlehne formschlüssig zu realisieren. Dabei ist die Mechanik der Verriegelungsvorrichtung auch mit einer Indikatoreinrichtung mechanisch gekoppelt, welche den Betätigungszustand der Verriegelungseinrichtung, betätigt oder unbetätigt, anzeigt. Dazu weist die Indikatoreinrichtung ein verlagerbares Indikatorelement auf, das dann, wenn die Verriegelungsvorrichtung entriegelt beziehungsweise betätigt wird, aus einer Ruheposition in einem Gehäuse aus dem Gehäuse heraus in eine Anzeigeposition geschoben wird, sodass ein Benutzer an dem vorstehenden Indikatorelement erkennen kann, dass die Verriegelung der Rückenlehne gelöst ist und die Rückenlehne verschwenkt werden kann. Die Offenlegungsschrift US 2018/297495 A1 offenbart eine weitere Indikatoreinrichtung.

Der Erfindung liegt die Aufgabe zugrunde, eine verbesserte Indikatoreinrichtung zu schaffen, die einerseits ein sicheres Anzeigen des Betätigungszustands der Verriegelungsvorrichtung gewährleistet, und andererseits verschleißarm, kostengünstig und einfach zu betätigen ist.

Die der Erfindung zugrundeliegende Aufgabe wird durch eine Indikatoreinrichtung mit den Merkmalen des Anspruchs 1 gelöst. Die erfindungsgemäße Indikatoreinrichtung hat den Vorteil, dass die Bewegung des Indikatorelements mechanisch von der Verriegelungsvorrichtung und deren Betätigungszustand entkoppelt ist, sodass auf eine aufwendige Kraftübertragung von der Verriegelungsvorrichtung bis zu dem Indikatorelement verzichtet werden kann. Dadurch wird die konstruktive Ausbildung der Indikatoreinrichtung selbst vereinfacht und die Flexibilität der Anordnung insbesondere an der Rückenlehne erhöht. Insbesondere wird der Bauraumbedarf für die Indikatoreinrichtung reduziert. Darüber hinaus ist das Indikatorelement jederzeit entgegen einer Betätigungskraft von dem Benutzer bewegbar, ohne dass dadurch eine mechanische Überanspruchung eines Elements der Indikatoreinrichtung erfolgen kann. Dadurch bietet die erfindungsgemäße Indikatoreinrichtung auch eine hohe Betriebssicherheit. Erfindungsgemäß wird dies alles dadurch erreicht, dass die Aktuatoreinrichtung als elektromagnetischer Aktuator ausgebildet ist. Dadurch wird erreicht, dass das Indikatorelement nicht mechanisch, sondern elektromagnetisch bewegt wird, wodurch keine Kraftübertragung von der Verriegelungsvorrichtung auf das Indikatorelement durch mechanische Teile erfolgen muss und insbesondere die mechanische Kopplung mit der Verriegelungsvorrichtung entfällt. Darüber hinaus ist die Indikatoreinrichtung als eine Baueinheit ausgebildet, die losgelöst von der Verriegelungsvorrichtung an jeder Stelle der Rückenlehne anordenbar ist.

Gemäß einer bevorzugten Weiterbildung der Erfindung weist das Indikatorelement einen Magnetanker auf, der in dem Gehäuse verschiebbar gelagert ist, wobei in dem Gehäuse außerdem zumindest eine elektrisch bestrombare Magnetspule zum Erzeugen eines auf den Magnetanker wirkenden Magnetfeldes angeordnet ist. Durch den Magnetanker und die Magnetspule ist der elektromagnetische Aktuator kostengünstig und robust ausgebildet.

Weiterhin ist bevorzugt vorgesehen, dass dem Indikatorelement zumindest eine Rückstellfeder zugeordnet ist. Die Rückstellfeder gewährleistet in vorteilhafter Weise, dass das Indikatorelement stets in seine Ausgangsstellung zurückgelangt und beispielsweise nicht ungewollt in der Anzeigestellung verbleibt.

Vorzugsweise ist der Aktuator dazu ausgebildet, das Indikatorelement entgegen der Federkraft der Rückstellfeder in die Anzeigeposition zu bewegen. Das Indikatorelement wird somit elektromagnetisch in die Anzeigeposition bewegt und durch die Rückstellfeder zurück in die Ruheposition, sobald die Magnetspule des Aktuators nicht mehr bestromt wird. Hierdurch ist eine einfache und verlässliche Bewegung des Indikatorelements gewährleistet.

Vorzugsweise weist das Gehäuse einen Führungskanal zur formschlüssigen Schiebelagerung des Indikatorelements auf. Durch die Schiebelagerung ist eine eindeutige Bewegung beziehungsweise Linearführung für das Indikatorelement gewährleistet, sodass beispielsweise ein Verkanten des Indikatorelements beim Bewegen sicher vermieden wird.

Weiterhin ist bevorzugt vorgesehen, dass das Gehäuse eine Gehäuseöffnung aufweist, durch welche das Indikatorelement hindurchbewegbar ist, wobei die Kontur der Gehäuseöffnung mit der Außenkontur des Indikatorelements korrespondiert. Insbesondere sind die Konturen derart ausgebildet, dass das Indikatorelement seitlich nahezu spielfrei in der Gehäuseöffnung einliegt. Durch diese Ausführungsform wird gewährleistet, dass das Indikatorelement einerseits durch die Gehäuseöffnung mitgeführt wird, sodass die Gehäuseöffnung insbesondere einen Teil der Schiebelagerung bildet, und dass andererseits der Innenraum des Gehäuses durch das in der Gehäuseöffnung einliegende Indikatorelement verschlossen ist, sodass Schmutzpartikel oder andere Störelemente nicht in den Innenraum der Indikatoreinrichtung beziehungsweise in das Gehäuse der Indikatoreinrichtung gelangen können.

Insbesondere ist dabei vorgesehen, dass das Indikatorelement in der Ruheposition mit einem freien Ende bündig mit einer die Gehäuseöffnung aufweisenden Gehäusewand abschließt. Damit verschließt das Indikatorelement die Gehäusewand auch dann, wenn es sich in der Ruheposition befindet. Darüber hinaus gewährleistet diese Ausführungsform, dass das Indikatorelement in der Ruheposition nicht an dem Gehäuse vorsteht und dadurch bei NichtGebrauch auch nicht stört.

Weiterhin ist bevorzugt vorgesehen, dass das Indikatorelement an seinem freien Ende zumindest ein ansteuerbares Leuchtmittel, insbesondere eine Leuchtdiode aufweist. Durch das Leuchtmittel ist es möglich, das Indikatorelement zu beleuchten beziehungsweise zu markieren, sodass zum einen das Indikatorelement schnell in den Blick des Benutzers fällt, und zum anderen insbesondere der Betätigungszustand der Verriegelungsvorrichtung auch im Dunkeln einfach zu erkennen ist. Insbesondere ist die Indikatoreinrichtung derart ausgebildet, dass das Leuchtmittel nur dann angesteuert wird, wenn sich das Indikatorelement in der Anzeigeposition befindet oder in diese bewegt wird.

Besonders bevorzugt ist das Leuchtmittel elektrisch mit dem Aktuator gekoppelt, sodass das Leuchtmittel leuchtet, wenn der Aktuator zum Bewegen des Indikatorelements in die Anzeigeposition bestromt wird beziehungsweise ist. Dadurch werden der Aktuator und das Leuchtmittel gleichzeitig angesteuert und eine einfache und vorteilhafte Anzeige des entriegelten Zustands der Verriegelungsvorrichtung ermöglicht.

Vorzugsweise weist das Indikatorelement an seinem freien Ende eine transparente, insbesondere becherförmige Abdeckkappe auf, innerhalb welcher das Leuchtmittel angeordnet ist. Durch die Abdeckkappe wird das Leuchtmittel geschützt und die Beleuchtung des Indikatorelements vereinfacht. Insbesondere wird das von dem Leuchtmittel erzeugte Licht an der Abdeckkappe reflektiert, sodass die Abdeckkappe selbst zumindest abschnittsweise leuchtet beziehungsweise leuchtend erscheint. Dadurch ist eine vorteilhafte Lichtverteilung an dem freien Ende des Indikatorelements gewährleistet. Beispielsweise weist die Abdeckkappe eine transparente oder mit Öffnungen versehene Seitenwand und eine lichtundurchlässige Stirnwand auf, sodass das Licht des Leuchtmittels erst dann erkennbar ist, wenn das Indikatorelement derart weit von dem Gehäuse vorsteht, dass sich die Seitenwand der Abdeckkappe außerhalb des Gehäuses befindet. Alternativ ist die Abdeckkappe insgesamt aus einem transparenten Material gefertigt, sodass sie aufleuchtet, sobald das Leuchtmittel angesteuert wird. Insbesondere weisen die Abdeckkappe und/oder das Leuchtmittel eine vorgegebene Farbe auf, mit einer Signalfarbe, sodass ein kostengünstiges farbloses Leuchtmittel einsetzbar ist und die Abdeckkappe dennoch in einer gewünschten Signalfarbe aufleuchtet. Insbesondere ist das Leuchtmittel und/oder die Abdeckkappe dazu ausgebildet, rot zu leuchten.

Der erfindungsgemäße Fahrzeugsitz mit den Merkmalen des Anspruchs 11 zeichnet sich durch die erfindungsgemäße Indikatoreinrichtung aus. Es ergeben sich hierdurch die bereits genannten Vorteile.

Besonders bevorzugt ist die Indikatoreinrichtung an einem von dem Sitzteil abgewandten Ende der Rückenlehne angeordnet. Damit befindet sich die Indikatoreinrichtung insbesondere an einem oberen Ende der Rückenlehne in ihrer aufgerichteten Gebrauchsstellung, sodass die Indikatoreinrichtung von einem Benutzer leicht erkennbar ist. Besonders bevorzugt ist die Indikatoreinrichtung elektrisch mit einem Sensor der Verriegelungsvorrichtung verbunden, welcher den Verriegelungszustand der Verriegelungsvorrichtung und damit den Betätigungszustand der Verriegelungsvorrichtung überwacht. Ein optionales Steuergerät ist dabei dazu ausgebildet, in Abhängigkeit von den Sensordaten die Indikatoreinrichtung anzusteuern. Optional weist die Indikatoreinrichtung selbst das Steuergerät, beispielsweise in Form einer Steuereinheit oder eines Mikroprozessors auf, der in Abhängigkeit von einem Ausgangssignal des Sensors den elektromagnetischen Aktuator und/oder das Leuchtmittel ansteuert.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: einen Fahrzeugsitz für ein Kraftfahrzeug in einer vereinfachten perspektivischen Darstellung, und
- Figuren 2A und 2B: eine vorteilhafte Indikatoreinrichtung des Fahrzeugsitzes in zwei unterschiedlichen Betriebszuständen, jeweils in einer vereinfachten Seitenansicht.

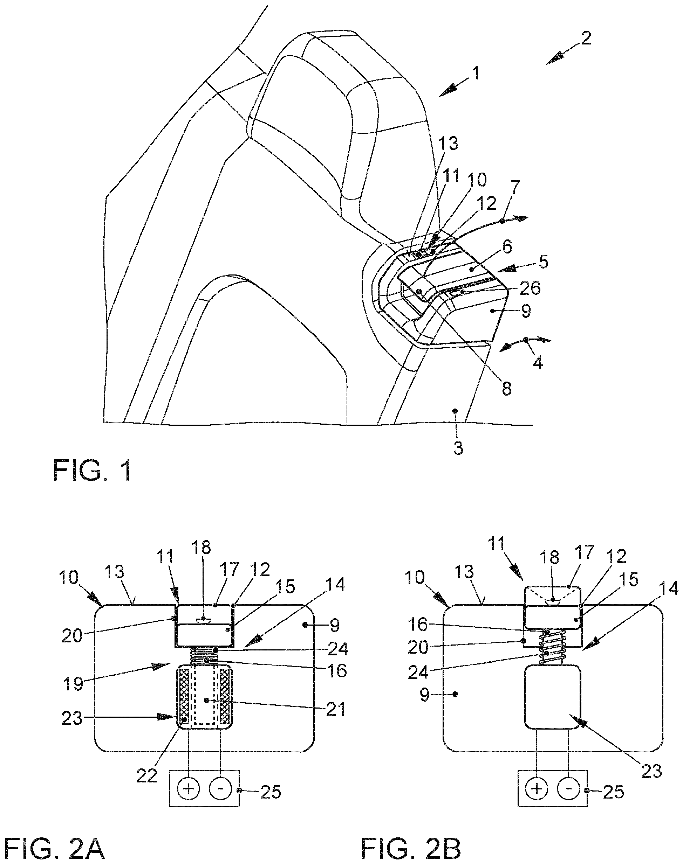

Figur 1 zeigt in einer vereinfachten perspektivischen Darstellung einen Fahrzeugsitz 1 für ein hier nicht näher dargestelltes Kraftfahrzeug 2. Der Fahrzeugsitz 1 weist eine Rückenlehne 3 auf, die an einem Sitzteil des Fahrzeugsitzes 1 um eine Horizontalachse verschwenkbar gelagert ist, wie durch einen Doppelpfeil 4 in Figur 1 angezeigt.

Die Rückenlehne 3 weist eine Verriegelungsvorrichtung 5 auf, mittels welcher die Rückenlehne 1 in zumindest einer Stellung, insbesondere in der aufgerichteten Gebrauchsstellung, wie sie in Figur 1 gezeigt ist, arretierbar ist. Die Verriegelungsvorrichtung 5 weist einen Entriegelungshebel 6 auf, der bei seiner Betätigung die Verriegelungsvorrichtung 5 entriegelt beziehungsweise löst, sodass in Folge dessen die Rückenlehne 3 gemäß Pfeil 4 verschwenkbar ist. Der Entriegelungshebel 6 ist dazu gemäß einem Pfeil 7 an seinem freien Ende 8 von einem Benutzer verschwenkbar. Der Hebel 6 ist dabei mechanisch, beispielsweise mithilfe eines Bowdenzugs und/oder Seilzugs mit einer Schlosseinrichtung verbunden, die beispielsweise dem Schwenkgelenk der Rückenlehne 3 zugeordnet ist, um durch eine lösbare Verbindung die Rückenlehne 3 in die Gebrauchsstellung zu verriegeln oder durch Betätigung des Entriegelungshebels 6 zu entriegeln. Die Verriegelungsvorrichtung 5 weist ein Gehäuse 9 auf, das an einer Schulter der Rückenlehne 3 angeordnet ist und den Entriegelungshebel 6 verschwenkbar lagert.

In das Gehäuse 9 ist außerdem eine Indikatoreinrichtung 10 integriert. In Figur 1 ist von der Indikatoreinrichtung 10 lediglich ein Indikatorelement 11 erkennbar, das in einer Öffnung 12 einer Gehäusewand 13 des Gehäuses 9 bündig mit der Gehäusewand 13 einliegt.

Figuren 2A und 2B zeigen in jeweils einer vereinfachten Darstellung die Indikatoreinrichtung 10 in zwei unterschiedlichen Betriebszuständen.

Das Indikatorelement 11 der Indikatoreinrichtung 10 ist mehrteilig ausgebildet. Dabei was das Indikatorelement 11 ein Aktuatorelement 14 auf, das ein Trägerelement 15 und ein mit dem Trägerelement 15 fest verbundenen Betätigungskolben 16 aufweist. Das Trägerelement 15 ist dabei an einem stirnseitigen Ende des Betätigungskolbens 16 angeordnet. Auf dem Trägerelement 15 ist als weiteres Teil des Indikatorelements 11 eine Abdeckkappe 17 angeordnet, die becherförmig ausgebildet ist. Innerhalb der Abdeckkappe 17 sind auf dem Trägerelement 15 zumindest ein oder mehrere Leuchtmittel 18, vorzugsweise in Form von Leuchtdioden, angeordnet, die dazu ausgebildet sind, die Abdeckkappe 17 von innen anzustrahlen. Die Abdeckkappe 17 selbst ist dabei aus einem transparenten Material, insbesondere aus einem transparenten Kunststoffmaterial gefertigt, sodass das Leuchten der Abdeckkappe 17 auch von außen erkennbar ist. Insbesondere ist die Abdeckkappe 17 aus einem farbigen Material, insbesondere mit einer Signalfarbe, wie beispielsweise rot, gefertigt, sodass die von den Leuchtmitteln 18 angestrahlte Abdeckkappe 17 rot erstrahlt.

Wie zuvor bereits erläutert, ist das Indikatorelement 11 derart ausgebildet, dass es in der in Figur 1 gezeigten Ruheposition mit einer freien Stirnseite der Abdeckkappe 17 bündig mit der Gehäusewand 13 des Gehäuses 9 abschließt. Dabei ist das Indikatorelement 11 in dem Gehäuse 9 durch eine Schiebelagerung 19 verschiebbar gelagert. Die Schiebelagerung 19 wird dabei insbesondere durch einen Führungskanal 20 in dem Gehäuse 9 gebildet. Das von der Abdeckkappe 17 abgewandte Ende des Indikatorelements 11 beziehungsweise des Aktuatorbolzens 16 ist als Magnetanker 21 ausgebildet, der zusammen mit einer in dem Gehäuse 9 angeordneten Magnetspule 22 einen elektromagnetischen Aktuator 23 bildet, wie in Figur 2A, die die genannten Bestandteile des Aktuators 23 zeigt, zu sehen ist. Wird die Magnetspule 22 bestromt beziehungsweise mit einer elektrischen Spannung beaufschlagt, so wird ein elektromagnetisches Feld erzeugt, welches den Magnetanker 21 mit einer Magnetkraft derart beaufschlagt, dass das Indikatorelement 11 aus der in Figur 2A und Figur 1 gezeigten Ruheposition in die in Figur 2B gezeigte Anzeigeposition aus dem Gehäuse 9 herausgeschoben wird, sodass zumindest die Abdeckkappe 17 beziehungsweise das anleuchtbare Ende des Indikatorelements 11 von dem Gehäuse 9 vorsteht. Bevorzugt ist das Leuchtmittel 18 mit der Magnetspule 22 elektrisch gekoppelt, sodass dann, wenn die Magnetspule 22 angesteuert wird, auch das Leuchtmittel 18 bestromt und damit aktiviert wird. Wird also der Aktuator 23 dazu angesteuert, das Indikatorelement 11 in die Anzeigeposition zu verlagert, so wird automatisch auch das Leuchtmittel 18 dazu angesteuert, das Indikatorelement 11 anzuleuchten.

Dem Aktuatorelement 14 ist außerdem eine Rückstellfeder 24 zugeordnet, die der magnetischen Kraft des Aktuators 23 entgegenwirkt. Dies hat zur Folge, dass dann, wenn der Aktuator 23 deaktiviert beziehungsweise die Bestromung beendet wird, das Indikatorelement 11 durch die Federkraft der Rückstellfeder 24 zurück in die Ausgangsstellung bewegt wird, wie sie in Figur 2A gezeigt ist.

Vorteilhafterweise ist dem Aktuator 23 ein Steuergerät 25, beispielsweise in Form eines Mikroprozessors oder einer integrierten Schaltung zugeordnet, welches die Magnetspule 22 und/oder das Leuchtmittel 18 in Abhängigkeit von dem Betätigungszustand der Verriegelungsvorrichtung 5, insbesondere des Entriegelungshebels 6 ansteuert. Dazu ist beispielsweise ein Sensor 26 dem Entriegelungshebel 6, wie in Figur 1 gezeigt, oder der Schlosseinrichtung zugeordnet, welcher dessen Betätigungszustand überwacht. Wird erkannt, dass der Entriegelungshebel 6 betätigt wurde, gemäß Pfeil 7 um die Verriegelung zu lösen, so steuert das Steuergerät 25 den Aktuator 23 sowie das Leuchtmittel 18 automatisch an. Wird erkannt, dass die Verriegelung wieder hergestellt ist, wird die Ansteuerung beendet und das Indikatorelement 11 gelangt zurück in seine anfängliche Ruheposition.

### Bezugszeichenliste

- 1: Fahrzeugsitz
- 2: Kraftfahrzeug
- 3: Rückenlehne
- 4: Doppelpfeil
- 5: Verriegelungsvorrichtung
- 6: Entriegelungshebel
- 7: Pfeil
- 8: Ende
- 9: Gehäuse
- 10: Indikatoreinrichtung
- 11: Indikatorelement
- 12: Öffnung
- 13: Gehäusewand
- 14: Aktuatorelement
- 15: Trägerelement
- 16: Betätigungskolben / Aktuatorbolzen
- 17: Abdeckkappe
- 18: Leuchtmittel
- 19: Schiebelagerung
- 20: Führungskanal
- 21: Magnetanker
- 22: Magnetspule
- 23: Aktuator
- 24: Rückstellfeder
- 25: Steuergerät
- 26: Sensor

## Patentansprüche

1. Indikatoreinrichtung (10) für ein beweglich gelagertes Element, insbesondere Rückenlehne (3) eines Fahrzeugsitzes (1), das durch eine entriegelbare Verriegelungsvorrichtung (5) in zumindest einer Stellung arretierbar ist, wobei die Indikatoreinrichtung (10) zumindest ein Indikatorelement (11), das von einer in einem Gehäuse (9) versenkten Ruheposition in eine von dem Gehäuse (9) vorstehenden Anzeigeposition bewegbar ist, und eine Aktuatoreinrichtung zum Bewegen des Indikatorelements (11) in Abhängigkeit von einem Zustand der Verriegelungsvorrichtung (5) aufweist, **dadurch gekennzeichnet, dass** die Aktuatoreinrichtung als elektromagnetischer Aktuator (23) ausgebildet ist.

2. Indikatoreinrichtung nach Anspruch 1, **dadurch gekennzeichnet, dass** das Indikatorelement (11) einen Magnetanker (21) aufweist, der in dem Gehäuse (9) verschiebbar gelagert ist, wobei in dem Gehäuse (9) zumindest eine elektrisch bestrombare Magnetspule (22) zum Erzeugen eines auf den Magnetanker (21) wirkenden Magnetfeldes angeordnet ist.

3. Indikatoreinrichtung nach einem der vorhergehenden Ansprüche, **dadurch gekennzeichnet, dass** dem Indikatorelement (11) zumindest eine Rückstellfeder (24) zugeordnet ist.

4. Indikatoreinrichtung nach Anspruch 3, **dadurch gekennzeichnet, dass** der Aktuator (23) dazu ausgebildet ist, das Indikatorelement (11) entgegen der Federkraft der Rückstellfeder (24) in die Anzeigeposition zu bewegen.

5. Indikatoreinrichtung nach einem der vorhergehenden Ansprüche, **dadurch gekennzeichnet, dass** das Gehäuse (9) einen Führungskanal (20) zur formschlüssigen Schiebelagerung des Indikatorelements (11) aufweist.

6. Indikatoreinrichtung nach einem der vorhergehenden Ansprüche, **dadurch gekennzeichnet, dass** das Gehäuse (9) eine Gehäuseöffnung (12) aufweist, durch welche das Indikatorelement (11) hindurch bewegbar ist, wobei die Kontur der Gehäuseöffnung (12) mit der Außenkontur des Indikatorelements (11) korrespondiert.

7. Indikatoreinrichtung nach einem der vorhergehenden Ansprüche, **dadurch gekennzeichnet, dass** das Indikatorelement (11) in der Ruheposition mit einem freien Ende (8) bündig mit einer die Gehäuseöffnung (12) aufweisenden Gehäusewand (13) abschließt.

8. Indikatoreinrichtung nach einem der vorhergehenden Ansprüche, **dadurch gekennzeichnet, dass** das Indikatorelement (11) an seinem freien Ende (8) zumindest ein ansteuerbares Leuchtmittel (18), insbesondere Leuchtdiode, aufweist.

9. Indikatoreinrichtung nach einem der vorhergehenden Ansprüche, **dadurch gekennzeichnet, dass** das Leuchtmittel (18) elektrisch mit dem Aktuator (23) gekoppelt ist, sodass das Leuchtmittel (18) leuchtet, wenn der Aktuator (23) zum Bewegen des Indikatorelements (11) in die Anzeigeposition bestromt wird.

10. Indikatoreinrichtung nach einem der vorhergehenden Ansprüche, **dadurch gekennzeichnet, dass** das Indikatorelement (11) an seinem freien Ende (8) eine transparente, becherförmige Abdeckkappe (17) aufweist, innerhalb welcher das Leuchtmittel (18) angeordnet ist.

11. Fahrzeugsitz (1) für ein Fahrzeug, insbesondere Kraftfahrzeug, mit einem Sitzteil und mit einer dem Sitzteil zugeordneten und verschwenkbar gelagerten Rückenlehne (3), wobei die Rückenlehne (3) durch eine Verriegelungsvorrichtung (5) in zumindest einer Stellung arretierbar ist, und wobei an der Rückenlehne (3) eine Indikatoreinrichtung (10) zum Anzeigen eines Betätigungszustands der Verriegelungseinrichtung (5) angeordnet ist, **gekennzeichnet durch** die Ausbildung der Indikatoreinrichtung (10) nach einem der Ansprüche 1 bis 10.

12. Fahrzeugsitz (1) nach Anspruch 11, **dadurch gekennzeichnet, dass** die Indikatoreinrichtung (10) an einem von dem Sitzteil abgewandten Ende der Rückenlehne (3) angeordnet ist.

13. Fahrzeugsitz (1) nach einem der Ansprüche 11 bis 12, **dadurch gekennzeichnet, dass** die Verriegelungsvorrichtung (5) zumindest einen Sensor (26) zum Erfassen ihres Betätigungszustands aufweist.

14. Fahrzeugsitz (1) nach einem der Ansprüche 11 bis 13, **dadurch gekennzeichnet, dass** ein Steuergerät (25), insbesondere ein Mikroprozessor, vorhanden ist, der in Abhängigkeit von einem Ausgangssignal des Sensors (26) zumindest den elektromagnetischen Aktuator (23) ansteuert.

## Claims

1. Indicator device (10) for a movably mounted element, in particular a backrest (3) of a vehicle seat (1), which can be locked in at least one position by means of an unlockable locking apparatus (5), the indicator device (10) comprising at least one indicator element (11), which can be moved from a rest position retracted in a housing (9) into a display position protruding from the housing (9), and an actuator device for moving the indicator element (11) depending on a state of the locking apparatus (5), **characterized in that** the actuator device is designed as an electromagnetic actuator (23).

2. Indicator device according to claim 1, **characterized in that** the indicator element (11) comprises a magnet armature (21) which is movably mounted in the housing (9), at least one electrically energizable magnet coil (22) for generating a magnetic field acting on the magnet armature (21) being arranged in the housing (9).

3. Indicator device according to either of the preceding claims,
**characterized in that** at least one return spring (24) is associated with the indicator element (11).

4. Indicator device according to claim 3, **characterized in that** the actuator (23) is designed to move the indicator element (11) into the display position against the spring force of the return spring (24).

5. Indicator device according to any of the preceding claims,
**characterized in that** the housing (9) comprises a guide channel (20) for slidingly mounting the indicator element (11) in a form-fitting manner.

6. Indicator device according to any of the preceding claims,
**characterized in that** the housing (9) comprises a housing opening (12) through which the indicator element (11) can be moved, the contour of the housing opening (12) corresponding to the outer contour of the indicator element (11).

7. Indicator device according to any of the preceding claims,
**characterized in that** the indicator element (11) in the rest position terminates with a free end (8) flush with a housing wall (13) comprising the housing opening (12).

8. Indicator device according to any of the preceding claims,
**characterized in that** the indicator element (11) comprises at least one controllable lighting means (18), in particular a light-emitting diode, at its free end (8).

9. Indicator device according to any of the preceding claims,
**characterized in that** the lighting means (18) is electrically coupled to the actuator (23) so that the lighting means (18) lights up when the actuator (23) is energized to move the indicator element (11) into the display position.

10. Indicator device according to any of the preceding claims,
**characterized in that** the indicator element (11) comprises a transparent, cup-shaped cover cap (17) at its free end (8), within which cover cap the lighting means (18) is arranged.

11. Vehicle seat (1) for a vehicle, in particular a motor vehicle, comprising a seat part and comprising a pivotably mounted backrest (3) associated with the seat part, the backrest (3) being lockable in at least one position by means of a locking apparatus (5), and an indicator device (10) for displaying an actuation state of the locking apparatus (5) being arranged on the backrest (3), **characterized by** the design of the indicator device (10) according to any of claims 1 to 10.

12. Vehicle seat (1) according to claim 11, **characterized in that** the indicator device (10) is arranged at an end of the backrest (3) that is remote from the seat part.

13. Vehicle seat (1) according to either claim 11 or claim 12,
**characterized in that** the locking apparatus (5) comprises at least one sensor (26) for detecting the actuation state thereof.

14. Vehicle seat (1) according to any of claims 11 to 13, **characterized in that** a control unit (25), in particular a microprocessor, is provided, which controls at least the electromagnetic actuator (23) depending on an output signal of the sensor (26).

## Revendications

1. Appareil indicateur (10) pour un élément monté mobile, en particulier un dossier (3) d'un siège de véhicule (1), qui peut être bloqué dans au moins une position par un dispositif de verrouillage (5) pouvant être déverrouillé, dans lequel l'appareil indicateur (10) présente au moins un élément indicateur (11) qui peut être déplacé d'une position de repos enfoncée dans un boîtier (9) à une position d'affichage faisant saillie du boîtier (9), et un appareil actionneur pour le déplacement de l'élément indicateur (11) en fonction d'un état du dispositif de verrouillage (5), **caractérisé en ce que** l'appareil actionneur est réalisé comme un actionneur (23) électromagnétique.

2. Appareil indicateur selon la revendication 1, **caractérisé en ce que** l'élément indicateur (11) présente une armature magnétique (21) qui est montée de manière à pouvoir coulisser dans le boîtier (9), dans lequel au moins une bobine magnétique (22) pouvant être alimentée électriquement est disposée dans le boîtier (9) pour la génération d'un champ magnétique agissant sur l'armature magnétique (21).

3. Appareil indicateur selon l'une des revendications précédentes,
**caractérisé en ce qu'**au moins un ressort de rappel (24) est associé à l'élément indicateur (11).

4. Appareil indicateur selon la revendication 3, **caractérisé en ce que** l'actionneur (23) est réalisé pour déplacer l'élément indicateur (11) dans la position d'affichage à l'encontre de la force de ressort du ressort de rappel (24).

5. Appareil indicateur selon l'une des revendications précédentes,
**caractérisé en ce que** le boîtier (9) présente un canal de guidage (20) pour le montage coulissant par complémentarité de forme de l'élément indicateur (11).

6. Appareil indicateur selon l'une des revendications précédentes,
**caractérisé en ce que** le boîtier (9) présente une ouverture de boîtier (12) à travers laquelle l'élément indicateur (11) peut être déplacé, dans lequel le contour de l'ouverture de boîtier (12) correspond au contour externe de l'élément indicateur (11).

7. Appareil indicateur selon l'une des revendications précédentes,
**caractérisé en ce que** l'élément indicateur (11), dans la position de repos, se termine par une extrémité libre (8) à fleur d'une paroi de boîtier (13) présentant l'ouverture de boîtier (12).

8. Appareil indicateur selon l'une des revendications précédentes,
**caractérisé en ce que** l'élément indicateur (11) présente à son extrémité libre (8) au moins un moyen lumineux (18) pouvant être commandé, en particulier une diode électroluminescente.

9. Appareil indicateur selon l'une des revendications précédentes,
**caractérisé en ce que** le moyen lumineux (18) est couplé électriquement à l'actionneur (23) de sorte que le moyen lumineux (18) s'allume lorsque l'actionneur (23) est alimenté pour le déplacement de l'élément indicateur (11) vers la position d'affichage.

10. Appareil indicateur selon l'une des revendications précédentes,
**caractérisé en ce que** l'élément indicateur (11) présente à son extrémité libre (8) un capuchon de recouvrement (17) transparent en forme de godet, à l'intérieur duquel est disposé le moyen lumineux (18).

11. Siège de véhicule (1) pour un véhicule, en particulier un véhicule automobile, comportant une partie d'assise et comportant un dossier (3) associé à la partie d'assise et monté de manière à pouvoir pivoter, dans lequel le dossier (3) peut être bloqué dans au moins une position par un dispositif de verrouillage (5), et dans lequel un appareil indicateur (10) est disposé sur le dossier (3) pour l'affichage d'un état d'actionnement de l'appareil de verrouillage (5),
**caractérisé par** la réalisation de l'appareil indicateur (10) selon l'une des revendications 1 à 10.

12. Siège de véhicule (1) selon la revendication 11, **caractérisé en ce que** l'appareil indicateur (10) est disposé au niveau d'une extrémité du dossier (3) opposée à la partie d'assise.

13. Siège de véhicule (1) selon l'une des revendications 11 à 12,
**caractérisé en ce que** le dispositif de verrouillage (5) présente au moins un capteur (26) pour la détection de son état d'actionnement.

14. Siège de véhicule (1) selon l'une des revendications 11 à 13,
**caractérisé en ce qu'il** est prévu un équipement de commande (25), en particulier un microprocesseur, qui commande au moins l'actionneur (23) électromagnétique en fonction d'un signal de sortie du capteur (26).
